# FASCICULE DE BREVET EUROPEEN

(11) **EP 4 267 372 B1**
(45) Date de publication et mention de la délivrance du brevet: **14.08.2024**
(21) Numéro de dépôt: 21843717.6
(22) Date de dépôt: 21.12.2021
(51) Int. Cl.: B29C 49/68, B29C 49/64, B29C 49/06, B29K 67/00, B29L 31/00, B29C 49/78, B29C 49/42

(54) **PROCÉDÉ DE VÉRIFICATION AUTOMATIQUE DE LA PRÉSENCE D'ORGANES DE MAINTIEN DE PRÉFORMES DANS UNE STATION DE CHAUFFAGE**
VERFAHREN ZUR AUTOMATISCHEN ÜBERPRÜFUNG DER ANWESENHEIT VON ELEMENTEN ZUR HALTERUNG VON VORFORMLINGEN IN EINER HEIZSTATION
METHOD FOR AUTOMATICALLY VERIFYING THE PRESENCE OF MEMBERS FOR HOLDING PREFORMS IN A HEATING STATION

(30) Priorité: 22.12.2020 FR 2013885
(43) Date de publication de la demande: 01.11.2023
(73) Titulaire: Sidel Participations, 76930 Octeville-sur-Mer (FR)
(72) Inventeur: BOURVELLEC, Loïc, 76930 OCTEVILLE-SUR-MER (FR); PASQUIER, Hervé, 76930 OCTEVILLE-SUR-MER (FR)
(74) Mandataire: Sidel Group
(86) Numéro de dépôt international: PCT/EP2021/087055
(87) Numéro de publication internationale: WO 2022/136410

(56) Documents cités:
- EP-A1- 0 387 737
- FR-A1- 3 080 056
- US-A1- 2015 083 364
- US-B2- 8 235 698

## Description

### Domaine technique de l'invention

L'invention se rapporte à un procédé de vérification automatique de la présence d'organes de maintien de préformes en matériau thermoplastique dans une station de chauffage, la station de chauffage étant équipée d'un dispositif de transport des préformes le long d'un tunnel de chauffage, le dispositif de transport comportant :
- une pluralité de supports mobiles ;
- des organes de maintien individuel des préformes par leur col, chacun des organes de maintien étant porté par un support mobile, les organes de maintien étant fixés de manière démontable sur leur support mobile respectif.

Des procédés apparentés et selon l'art antérieur sont décrits dans les documents US8235698B2, EP0387737A1 et US2015/083364A1.

### Arrière-plan technique

On connaît déjà des installations de fabrication de récipients en grandes séries à partir de préformes. Les préformes sont généralement obtenues par injection d'un matériau thermoplastique. Puis, elles sont refroidies et stockées en vue de leur transformation ultérieure en récipients finaux.

Les préformes comportent classiquement un corps qui est destiné à être conformé en récipient final lors d'une opération de formage, par exemple par soufflage ou par étirage-soufflage, de la paroi de la préforme. Les préformes comportent aussi un col qui est déjà moulé à sa forme définitive. Il est donc important de protéger le col de la préforme afin qu'il ne soit ni déformé ni endommagé durant la fabrication du récipient final.

Pour permettre le formage du corps de la préforme lors de l'étape de formage, la paroi du corps est préalablement chauffée à une température suffisante pour la rendre malléable. Cette opération de chauffage est réalisée juste avant l'opération de formage par passage de la préforme dans une station de chauffage.

La station de chauffage comporte généralement un tunnel de chauffage dans lequel sont agencés des dispositifs de chauffage, telles que des lampes à infrarouge. Les préformes sont prises en charge par un dispositif de transport qui fait défiler leur corps dans le tunnel de chauffage. Ce dispositif de transport comporte en général un support mobile le long du trajet des préformes sur lequel est monté un organe de maintien individuel d'une préforme.

Pour permettre un chauffage homogène du corps des préformes, les organes de maintien sont généralement conçus pour entraîner la préforme en rotation autour de son axe principal lors de son transport. De tels organes de maintien sont parfois dénommés "tournette".

Le corps de la préforme est rendu malléable par chauffage du matériau thermoplastique constituant sa paroi, notamment au-delà d'une température de transition vitreuse.

Comme expliqué précédemment, le col de la préforme présente déjà sa forme définitive. Contrairement au corps de la préforme, le col est donc maintenu à une température inférieure à ladite température de transition vitreuse pour éviter sa déformation.

A cet effet, la station de chauffage est conçue pour que le corps de la préforme soit reçu dans une partie "chaude" de la station formée par le tunnel de chauffage, tandis que le col de la préforme, qui doit rester relativement froid, est reçu dans une partie "froide" qui est généralement située sous le tunnel de chauffage.

Bien entendu, la partie chaude et la partie froide de la station de chauffage sont adjacentes. Pour réduire les échanges thermiques entre la partie chaude et la partie froide, il est connu d'interposer entre ces deux parties des rampes de protection thermique entre lesquelles les préformes défilent. Ces rampes de protection permettent de diminuer l'ouverture le tunnel de chauffage et la partie froide. Les rampes de protection sont écartées pour former une fente de défilement qui présente une largeur légèrement supérieure au diamètre externe du tronçon de préforme situé directement sous le col afin de permettre le défilement des préformes sans contact avec les rampes de protection.

Ces deux rampes de protection sont généralement refroidies par circulation interne d'un liquide caloporteur pour éviter que les rampes de protection n'accumulent de la chaleur.

Par ailleurs, certaines installations de fabrication comportent aussi des rampes de guidage qui permettent de guider les préformes au lieu de simplement les refroidir. C'est par exemple le cas dans des stations de chauffage utilisant des moyens de chauffage par laser pour chauffer le corps des préformes.

En outre, les installations de fabrication de récipient sont prévues pour permettre de réaliser des récipients finaux de formats différents. Ceci entraîne généralement l'utilisation de préformes de différents formats en fonction du lot de récipient à produire. Lors d'un changement de format de récipient, il est donc nécessaire d'adapter l'installation, et notamment la station de chauffage, aux dimensions des nouvelles préformes.

Ceci implique notamment de changer les organes de maintien pour les adapter au diamètre interne de col du nouveau format de préforme. A cet effet, les organes de maintien sont fixés de manière démontable sur leur support mobile, avantageusement par des moyens de fixation rapide.

Le changement des organes de maintien donne parfois lieu à des erreurs. Il est ainsi possible d'omettre d'équiper un support mobile d'un nouvel organe de maintien. Il est aussi possible d'équiper un support mobile d'un organe de maintien d'un modèle qui n'est pas adapté.

Ceci implique aussi d'effectuer un réglage de l'écartement des rampes pour adapter la largeur de la fente au diamètre sous col des préformes du nouveau format.

Cependant, le réglage manuel de la largeur de la fente requiert aussi beaucoup de temps.

### Résumé de l'invention

L'invention propose un procédé de vérification d'organes de maintien de préformes en matériau thermoplastique dans une station de chauffage, la station de chauffage étant équipée d'un dispositif de transport des préformes le long d'un tunnel de chauffage, le dispositif de transport comportant :
- une pluralité de supports mobiles ;
- des organes de maintien individuel des préformes par leur col, chacun des organes de maintien étant porté par un support mobile, les organes de maintien étant fixés de manière démontable sur leur support mobile respectif ;
   caractérisé en ce qu'il comporte :
   - une étape de mise en mouvement des supports mobiles pour les amener successivement dans une zone d'acquisition ;
   - une étape d'acquisition d'une image de chaque organe de maintien individuel lors du passage de chacun des supports mobiles dans la zone d'acquisition au moyen d'un dispositif de capture d'image ;
   - une étape de vérification automatique de la présence d'un organe de maintien sur chacune des images prises lors de l'étape d'acquisition par traitement informatique de chacune des images au moyen d'une unité électronique de commande.

Selon une autre caractéristique du procédé de l'invention, lorsqu'au moins un organe de maintien est détecté comme étant absent d'un support mobile lors de l'étape de vérification, un signal d'alerte est émis par l'unité électronique de commande.

Selon une autre caractéristique du procédé de l'invention, l'organe de maintien est formé par un mandrin destiné à être inséré dans le col d'une préforme, chaque organe de maintien étant destiné à être remplacé lors d'un changement de format de préformes afin d'être adapté à un diamètre externe de l'organe de maintien au diamètre interne du col de la préforme.

Selon une autre caractéristique du procédé de l'invention, il est déclenché après le début du remplacement des organes de maintien, avant une mise en service de la station de chauffage.

Selon une autre caractéristique du procédé de l'invention, la station de chauffage comporte :
- au moins une paire de rampes longitudinales qui délimitent une fente de défilement des préformes, au moins l'une des rampes étant mobile transversalement pour faire varier la largeur de la fente ;
- au moins un dispositif motorisé de déplacement transversal de l'au moins une rampe mobile pour adapter la largeur de la fente, ledit dispositif motorisé étant piloté automatiquement par une unité électronique de commande.

Selon une autre caractéristique du procédé de l'invention, il comporte :
- une étape de détermination automatique du diamètre externe de l'organe de maintien par traitement informatique d'au moins une des images prises lors de l'étape d'acquisition ;
- une étape d'ajustement automatique de la largeur de la fente par déplacement de l'au moins une rampe mobile en fonction du diamètre externe déterminé lors de l'étape de détermination afin d'adapter la largeur de la fente.

Selon une autre caractéristique du procédé de l'invention, lors de l'étape d'acquisition, le dispositif de capture d'image prend le profil de l'organe de maintien.

Selon une autre caractéristique du procédé de l'invention, le dispositif de capture d'image est agencé à une distance prédéterminée de l'organe de maintien lors de l'opération de prise d'image.

Selon une autre caractéristique du procédé de l'invention, la détermination du modèle de l'organe de maintien est réalisée par reconnaissance d'une marque visuelle portée par chacun des organes de maintien.

Selon une autre caractéristique du procédé de l'invention, lors de l'étape de détermination, le diamètre externe de l'organe de maintien est obtenu par multiplication de la largeur de l'organe de maintien mesurée sur l'image par un coefficient de proportionnalité prédéterminé.

Selon une autre caractéristique du procédé de l'invention, lors de l'étape de détermination, le contour de l'organe de maintien représenté sur l'image est comparé avec des contours d'organes de maintien mémorisés par l'unité électronique de commande, chaque contour mémorisé étant associé à un diamètre externe mémorisé par l'unité électronique de commande.

### Brève description des figures

D'autres caractéristiques et avantages de l'invention apparaitront au cours de la lecture de la description détaillée qui va suivre pour la compréhension de laquelle on se reportera aux dessins annexés dans lesquels :
La [Fig.1] est une vue de dessus qui représente schématiquement une station de chauffage de préforme apte à mettre en oeuvre de le procédé de vérification de l'invention.
La [Fig.2] est une vue en coupe longitudinale selon le plan de coupe 2-2 de la [Fig.1] qui représente une portion d'un dispositif de transport des préformes à travers la station de chauffage de la [Fig.1], un des organes de maintien étant montré en position montée tandis que l'autre des organes de est montré en position montée.
La [Fig.3] est une vue en coupe transversale selon le plan de coupe 3-3 de la [Fig.1] qui représente un tunnel de chauffage de la station de chauffage de la [Fig.1].
La [Fig.4] est une vue de dessous qui représente schématiquement des rampes de protections thermiques qui bordent le tunnel de chauffage de la station de chauffage de la [Fig.1].
La [Fig.5] est un schéma-bloc qui représente le procédé de l'invention.

### Description détaillée de l'invention

Dans la suite de la description, des éléments présentant une structure identique ou des fonctions analogues seront désignés par une même référence.

Dans la suite de la description, on adoptera à titre non limitatif des orientations longitudinale, dirigée d'arrière en avant, transversale, dirigée de gauche à droite, et verticale dirigée de bas en haut, indiquées par le trièdre "L,V,T" des figures. La direction verticale est utilisée à titre de repère purement géométrique sans rapport avec la gravité terrestre.

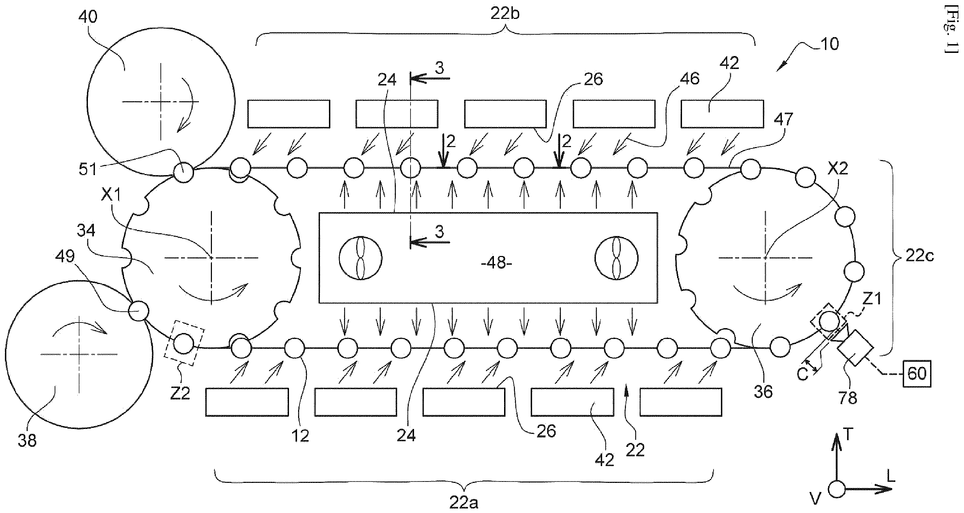

On a représenté à la [Fig.1] une station 10 de chauffage appartenant à une installation de fabrication de récipients par formage de préformes 12 en matériau thermoplastique, tel que du polyéthylène téréphtalate (PET), par soufflage ou étirage-soufflage. Les préformes 12 défilent les unes derrières les autres le long d'un trajet de production qui traverse diverses station de traitement, y compris la station de chauffage, de l'installation de fabrication.

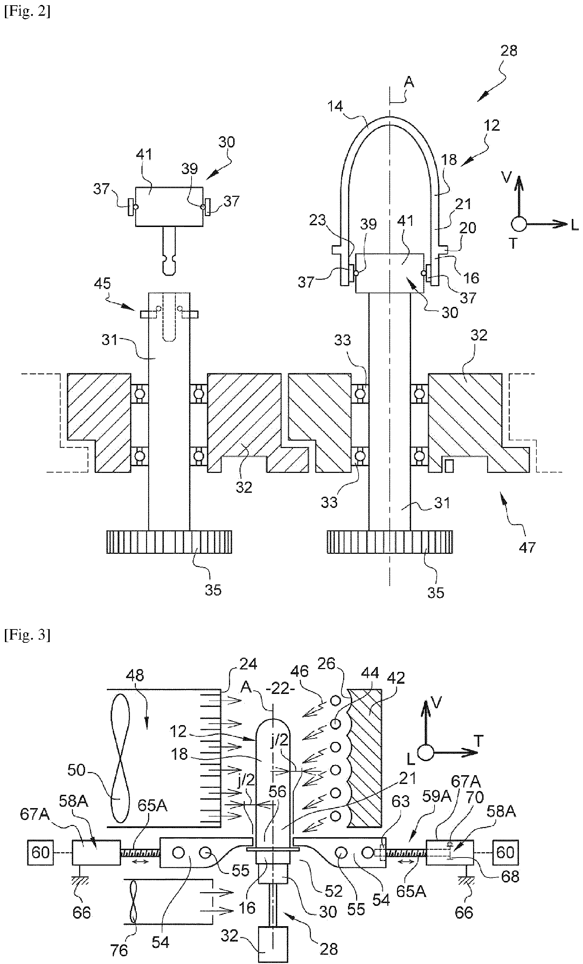

Comme cela est représenté à la [Fig.2], une préforme 12 se présente sous la forme d'un corps creux axisymétrique d'axe "A" principal qui est ici représenté verticalement. La préforme 12 est fermée à une première extrémité axiale par un fond 14, représenté ici en haut, et elle est ouverte à une extrémité axiale opposée formant un col 16, représenté ici en bas. La préforme 12 est ainsi divisée axialement en un premier tronçon qui s'étend du fond 14 jusqu'au début du col 16, ce premier tronçon étant communément appelé corps 18 de la préforme, et en un deuxième tronçon formé par ledit col 16. A sa jonction avec le corps 18 de la préforme 12, le col 16 comporte une collerette 20.

Le tronçon de corps 18 agencé directement au contact de la collerette 20, et représenté ici juste au-dessus du col 16 en référence à la [Fig.2], sera par la suite appelé tronçon 21 sous col. Le diamètre externe du tronçon 21 sous col, sera désigné par la suite "diamètre D1 sous col" (car la préforme 12 est ici présentée retournée aux figures 2 et 3).

En outre, le col 16 est délimité intérieurement par une paroi 23 cylindrique interne présentant un diamètre D2 interne.

De manière connue, le corps 18 de la préforme 12 est destiné à être étiré pendant une opération de formage du récipient final, tandis que le col 16 de la préforme 12 présente déjà la forme requise pour le récipient final. A cet effet, le corps 18 est destiné à être chauffé dans la station 10 de chauffage de manière à devenir malléable, tandis que le col 16 est destiné à rester tempéré dans la station 10 de chauffage pour éviter de le déformer.

En référence à la [Fig.1], la station 10 de chauffage comporte un tunnel 22 de chauffage qui présente ici deux tronçons 22a, 22b longitudinaux reliés entre eux par un virage 22c d'extrémité. Chaque tronçon 22a, 22b longitudinal du tunnel 22 de chauffage est délimité transversalement par une paroi 24 intérieure et par une paroi 26 extérieure.

La station 10 de chauffage comporte en outre un dispositif 28 de transport des préformes 12 en file le long du tunnel 22 de chauffage le long d'un chemin de chauffage qui forme un tronçon du trajet de production. Les préformes 12 sont ici transportées avec leur axe "A" vertical et col 16 dirigé vers le bas au niveau des tronçons 22a, 22b longitudinaux et au niveau du virage 22c d'extrémité pour protéger le col 16 de la chaleur. L'axe "A" principal des préformes 12 est ainsi orthogonal à leur sens de défilement le long du chemin de chauffage.

En variante non représentée, l'invention est aussi applicable à des préformes qui sont transportées avec le col transporté vers le haut.

Le dispositif 28 de transport a été représenté plus en détail à la [Fig.2]. Il comporte une pluralité de supports 32 mobiles circulant le long d'un circuit déterminé. Il s'agit ici d'un circuit fermé.

En variante non représentée de l'invention, les supports mobiles se déplacent le long d'un circuit ouvert.

Le dispositif 28 de transport comporte en outre des organes 30 de maintien individuel des préformes 12 par leur col 16. Chacun des organes 30 de maintien est porté par un support 32 mobile associé. De plus, chaque organe 30 de maintien est susceptible d'entraîner la préforme 12 qu'il porte en rotation autour de son axe "A" vertical lors de son trajet à travers la station 10 de chauffage. Cette rotation permet d'assurer un chauffage homogène du corps 18 de la préforme 12. Un tel ensemble est aussi connu sous la dénomination de "tournette".

Chaque organe 30 de maintien est monté solidaire en rotation avec un arbre 31 d'axe "A" vertical qui est monté à rotation dans un palier 33 de guidage du support mobile associé pour permettre l'entraînement en rotation de la préforme 12. L'organe 30 de maintien est ici monté à l'extrémité supérieure de l'arbre 31 en référence à la [Fig.2]. L'arbre 31 comporte ici à son extrémité inférieure un pignon 35 qui est susceptible de coopérer avec une crémaillère (non représentée) qui est agencée le long de la trajectoire du support 32 mobile pour son entraînement en rotation.

En variante non représentée, l'arbre est entraîné en rotation au moyen d'un moteur électrique embarqué sur le support mobile.

Chaque organe 30 de maintien est ici formé par un mandrin qui est agencé co-axialement à l'axe "A" de rotation. Le mandrin est susceptible d'être inséré axialement dans le col 16 du récipient avec un ajustement serré pour assurer l'immobilisation de la préforme 12 par frottement avec la paroi 23 cylindrique interne du col 16. Le mandrin comporte ici au moins trois segments 37, dont deux sont visibles en coupe à la [Fig.2], qui sont agencés autour de l'axe "A" de rotation. Chaque segment 37 est poussé radialement vers l'extérieur dans une position expansé par un anneau 39 réalisé en un matériau élastomère qui est interposé entre une partie 41 centrale de l'organe 30 de maintien qui est fixe par rapport à l'arbre 31. Ainsi, chaque segment 37 est susceptible d'être poussé radialement contre la paroi 23 cylindrique interne du col 16 pour saisir la préforme 12 par frottement. A cet égard, la portion de l'organe 30 de maintien destinée à être reçue serrée à l'intérieur du col 16 présente, à l'état expansé, un diamètre "D3" externe qui est légèrement supérieur au diamètre D2 interne du col 16 des préformes 12 destinées à être prises en charge. Le diamètre "D3" externe de l'organe 30 de maintien est par exemple égale à la somme du diamètre "D2" interne du col 16 et d'une surépaisseur "s" déterminée, par exemple de l'ordre du millimètre.

La station 10 de chauffage est généralement conçue pour permettre de traiter par lot différents modèles de préformes 12. Le diamètre "D2" interne du col 16 est susceptible de varier d'un modèle à l'autre. Ainsi, lorsqu'il est prévu de traiter un nouveau lot de préformes 12 présentant un diamètre "D2" interne de col 16 différent de celui des préformes 12 du lot précédent, il est nécessaire de changer tous les organes 30 de maintien de la station 10 de chauffage pour les adapter au nouveau format de préformes 12.

A cet effet, chaque organe 30 de maintien est fixé de manière démontable sur un support 32 mobile associé. Plus particulièrement, l'organe 30 de maintien est ici fixé de manière démontable à une extrémité axiale supérieure de l'arbre 31. A la [Fig.2], l'arbre 31 de gauche est représenté sans organe 30 de maintien, tandis que l'arbre 31 de droite est représenté équipé d'un organe 30 de maintien.

L'organe 30 de maintien peut être monté sur son support 32 mobile associé par tous moyens connus, par exemple par vissage. Il est cependant avantageux que l'organe 30 de maintien soit équipé de moyens 45 de fixation rapide qui permet un montage et un démontage sans outils. Il s'agit par exemple d'un moyen par emboîtement à verrouillage rapide, tel qu'un verrouillage à billes.

Dans l'exemple représenté aux figures, les supports 32 mobiles sont montés articulés deux à deux pour former les maillons d'une chaîne 47 fermée. Les supports 32 mobiles sont plus particulièrement articulés l'un à l'autre autour d'un axe parallèle à l'axe "A" d'une préforme 12 ainsi prise en charge par un organe 30 de maintien. Le défilement des préformes 12 ainsi réalisé par une chaîne 47 fermée de supports 32 mobiles.

En variante, les supports mobiles sont formés par des navettes qui circulent sur un rail, chaque navette formant avec le rail un moteur linéaire.

Lorsque les préformes 12 sont destinées à circuler col en bas, comme c'est ici le cas, les supports 32 mobile sont avantageusement aussi montés pivotants l'un par rapport à l'autre autour d'un axe longitudinal pour permettre un retournement des préformes 12 pendant leur transport. Ceci permet ainsi de prendre en charge les préformes 12 col en haut, puis de les chauffer col en bas, avant de les retourner à nouveau col en haut à la sortie de la station 10 de chauffage.

En se reportant à nouveau à la [Fig.1], la chaîne 47 est guidée et mise en mouvement par engrènement autour de deux roues 34, 36 de guidage. Chaque roue 34, 36 de guidage est montée à rotation autour d'un axe "X1, X2" vertical central associé. Les roues 34, 36 de guidage sont agencées aux deux extrémités longitudinales des tronçons 22a, 22b longitudinaux de tunnel 22 de chauffage.

Au moins l'une des roues 34, 36 de guidage est entreînée en rotation pour déplacer les organes 30 de maintien en déplacement. Par exemple, l'une des deux roues 34, 36 de guidage est entraînée par un moteur tandis que l'autre des deux roues 34, 36 de guidage, dite roue menée, est entraînée en rotation par la chaîne 47.

En variante, chacune des deux roues de guidage est entraînée en rotation par un moteur, par exemple au moyen d'un moteur brushless. Les deux roues de guidage sont entraînées conjointement en rotation. Cela permet avantageusement de réduire la tension dans la chaîne.

En variante non représentée, l'invention est aussi applicable à un dispositif de transport qui comporte des supports mobiles formant des navettes indépendantes qui se déplacent le long d'un rail. Chaque navette forme par exemple avec le rail un moteur électrique linéaire.

La première roue 34 de guidage est configurée pour permettre de charger des préformes 12 froides en un point 49 de chargement situé en amont du premier tronçon 22a longitudinal. Les préformes 12 froides sont délivrées par une roue 38 d'entrée. La première roue 34 de guidage est aussi configurée pour permettre de décharger les préformes 12 chaudes en un point 51 de déchargement situé en aval du deuxième tronçon 22b longitudinal et en amont du point 49 de chargement. Les préformes 12 chaudes sont prises en charge par une roue 40 de sortie.

La deuxième roue 36 de guidage permet de réaliser le virage 22c d'extrémité du tunnel 22 de chauffage entre les deux tronçons 22a, 22b longitudinaux.

Au moins l'une des deux roues 34, 36 de guidage est mue en rotation dans un sens antihoraire en se référant à la [Fig.1]. Les préformes 12 défilent ainsi successivement longitudinalement vers l'avant le long du chemin de chauffage à travers le premier tronçon 22a de tunnel, puis dans le virage 22c d'extrémité et enfin longitudinalement vers l'arrière à travers le deuxième tronçon 22b de tunnel.

Selon un exemple non limitatif de réalisation de la station 10 de chauffage représentée à la [Fig.3], la paroi 26 extérieure du tunnel 22 de chauffage est ici formée par la face interne d'une pluralité de modules 42 de chauffage. Chaque module 42 de chauffage comporte des moyens de chauffage radiant qui irradient un rayonnement 46 chauffant globalement transversalement vers l'intérieur du tunnel 22 de chauffage. Il s'agit ici, à titre non limitatif, de lampes 44 émettant dans le spectre des infrarouges.

La paroi 24 intérieure du tunnel 22 de chauffage est ici formée par une face d'un bloc 48 de refroidissement. Le bloc 48 de refroidissement est ici agencé transversalement entre les deux tronçons 22a, 22b longitudinaux de tunnel. Comme cela est représenté schématiquement à la [Fig.3], le bloc 48 de refroidissement comporte des moyens d'aération tels qu'un ventilateur 50 soufflant un flux d'air forcé qui est dirigé transversalement vers l'intérieur du tunnel 22 à travers une grille formée dans la paroi 24 intérieure.

Le tunnel 22 est destiné à recevoir les corps 18 des préformes 12 retournées col 16 en bas, leur axe "A" étant vertical, pour permettre leur chauffage à la température pour l'opération ultérieure de formage des récipients finaux.

En variante non représentée, les préformes défilent à l'endroit, col en haut.

Le tunnel 22 débouche verticalement vers le bas sur un couloir 52 de défilement des cols 16 des préformes 12. Comme expliqué précédemment, les cols 16 des préformes 12 doivent être tempérés, c'est-à-dire maintenus à une température inférieure à la température de transition vitreuse du matériau les constituant.

Lorsque les modules 42 de chauffage comportent des moyens de chauffage radiant, les radiations sont émises dans toutes les directions, y compris vers le col 16 des préformes 12. Pour limiter le passage de radiations chauffantes du tunnel 22 vers le couloir 52 ou le passage d'air chaud par convection, au moins une paire de rampes 54 de protection thermique des cols 16 des préformes 12 est interposée verticalement entre le tunnel 22 recevant les corps des préformes et le couloir 52 recevant les cols 16 des préformes. Les rampes 54 de protection délimitent ainsi verticalement le tunnel 22. Les rampes 54 de protection s'étendent parallèlement dans une direction longitudinale. Chaque tronçon 22a, 22b longitudinal est ici équipé d'une paire de rampes 54 de protection.

La face supérieure de chaque rampe 54 de protection, tournée vers le tunnel 22, forme avantageusement une surface réfléchissante qui permet de réfléchir les rayonnements chauffant en direction du corps 18 de la préforme 12. Pour éviter que la chaleur ne s'accumule dans les rampes 54 de protection, chaque rampe 54 de protection est avantageusement équipée de moyens 55 de refroidissement tel qu'un circuit de refroidissement dans lequel circule un fluide caloporteur.

Par ailleurs, pour éviter que la chaleur passant par une fente 56 ne chauffe l'air contenu dans le couloir 52, un deuxième moyen 76 de ventilation peut être agencé pour souffler transversalement un flux d'air forcé dans le couloir 52 afin d'en chasser l'air chaud, comme cela est représenté à la [Fig.2].

Selon une variante de réalisation non représentée de la station de chauffage, les moyens de chauffage sont formés par des organes d'émission d'un rayonnement laser chauffant. Le corps des préformes est alors chauffé localement sensiblement sans que la chaleur irradie dans toutes les directions. Dans ce cas, les moyens d'aération n'ont pas besoin d'être aussi puissants que dans la configuration de chauffage par des moyens de chauffage radiant. En outre, les préformes circulent de préférence col en haut car le tunnel n'est pas exposé à des radiations importantes et le col est donc moins susceptible d'être chauffé par convection comme dans le premier mode de réalisation. Dans cette variante de réalisation, la station de chauffage est aussi équipée d'au moins une paire de rampes, mais il s'agit ici de rampes de guidage des préformes. Les rampes n'ont alors pas de fonction de bouclier thermique comme c'est le cas pour les rampes de protection thermique. Ainsi, de telles rampes de guidage sont similaires à celles représentées à la [Fig.3], cependant, elles ne présentent pas les moyens de refroidissement.

Par la suite, on utilisera le terme "rampes 54" pour désigner indifféremment les rampes de protection du mode de réalisation représenté à la [Fig.3] et les rampes de guidage de la variante de réalisation non représentée, l'invention étant applicable indépendamment au mode de réalisation illustré et à la variante de réalisation non représentée.

Les rampes 54 sont généralement agencées dans les tronçons 22a, 22b longitudinaux du tunnel 22. Ainsi, la station 10 de chauffage comporte généralement deux paires de rampes 54 chacune agencée dans un tronçon 22a, 22b longitudinal associé du tunnel 22, tandis que le virage 22c n'est pas équipé de rampes.

Les rampes 54 d'une paire sont agencées dans un même plan transversal longitudinal, de part et d'autre du chemin de chauffage des préformes 12. A cet effet, les rampes 54 sont écartées transversalement pour réserver la fente 56 longitudinale de défilement des préformes 12.

Les rampes 54 d'une paire sont agencées au niveau du tronçon 21 sous col, c'est-à-dire au-dessus de la collerette 20 des préformes 12 lorsqu'elles défilent col 16 en bas ou au-dessous de la collerette 20 lorsqu'elles défilent col 16 en haut.

Dans un mode de production de la station de chauffage, la fente 56 présente une largeur transversale égale à la somme du diamètre sous col "D1" de la préforme 12 et d'un jeu "j" transversal, comme cela est représenté à la [Fig.3]. Le jeu "j" transversal est réparti en deux parties "j/2" sensiblement égales transversalement de part et d'autre de la préforme 12 pour permettre son défilement entre les rampes 54 sans contact avec ces dernières. Ainsi, le jeu "j" est égal à la somme des parties "j/2 + j/2". La largeur de la fente 56 est ici inférieure au diamètre externe de la collerette 20 des préformes 12.

Afin de permettre l'adaptation de la largeur de la fente 56 à plusieurs formats de préformes 12, au moins une rampe 54 d'une paire est monté mobile transversalement par rapport au tunnel 22 de chauffage. Ceci permet de faire varier la largeur de la fente 56. Dans l'exemple représenté à la [Fig.3], les deux rampes 54 de la paire sont montées mobiles transversalement par rapport au tunnel 22 de chauffage.

En outre, le déplacement transversal des rampes 54 est commandé par un dispositif 58A motorisé de déplacement transversal pour adapter automatiquement la largeur de la fente 56. Le dispositif 58A motorisé de déplacement transversal est susceptible d'être piloté automatiquement par une unité 60 électronique de commande.

En variante non représentée de l'invention, le module de chauffage est aussi monté mobile transversalement par rapport à la trajectoire des préformes. Le module de chauffage est par exemple solidaire de la rampe ou il est mobile indépendamment par l'intermédiaire d'un mécanisme similaire au mécanisme de déplacement des rampes.

Le dispositif 58A motorisé de déplacement transversal d'une rampe 54 comporte ici plusieurs mécanismes 59A de déplacement transversal qui sont montés le long de la rampe 54. Chaque mécanisme 59A de déplacement transversal est ici formé par un vérin mécanique. Un tel mécanisme 59A de déplacement transversal comporte un écrou 63 qui est monté fixe sur la rampe 54 de protection et une tige 65A qui est ici filetée, comme cela est illustré à la [Fig.3]. La tige 65A peut être guidée en rotation dans un boîtier 67A fixe transversalement par rapport à un bâti 66 de la station 10 de chauffage. Le bâti 66 est plus particulièrement fixe par rapport au sol sur lequel il repose.

La tige 65A est liée à des moyens qui assurent son entraînement en rotation. Ces moyens d'entraînement en rotation comportent ici une roue 68 dentée qui est solidaire en rotation de la tige 65A. La roue 68 dentée est associée à un arbre 70 fileté. Cet arbre 70 fileté s'étend longitudinalement, tout le long de la rampe 54 associée en engrenant la roue 68 dentée de chaque mécanisme 59A de déplacement transversal associé à ladite rampe 54. La roue 68 dentée est ici logée dans le boîtier 67A fixe.

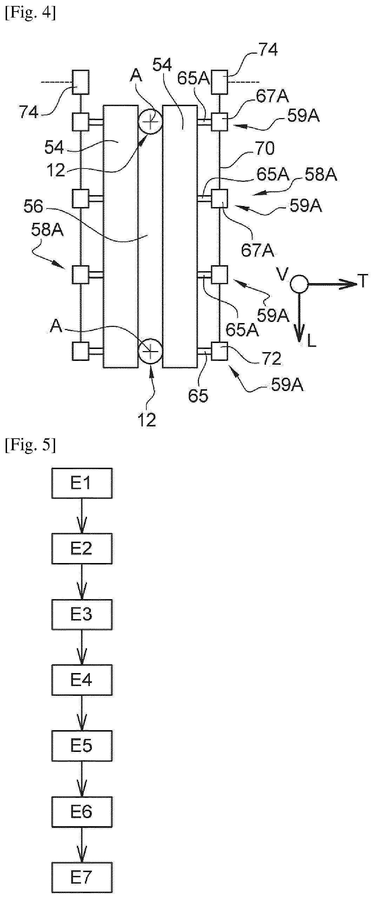

La rotation de l'arbre 70 fileté est commandée par un moteur 74 électrique agencé en bout d'arbre, comme cela est illustré à la [Fig.4]. Suivant le sens de rotation du moteur 74 électrique, cela provoque le déplacement par translation transversale de la rampe 54 de protection dans un sens ou dans l'autre pour écarter les rampes 54 de protection ou pour les rapprocher.

Les moteurs 74 des dispositifs 58A motorisés de déplacement transversal sont pilotés automatiquement par l'unité 60 électronique de commande.

Les moteurs 74 commandant le déplacement transversal des rampes 54 d'une même paire sont susceptibles d'être pilotés simultanément pour rapprocher ou écarter simultanément les deux rampes 54 de protection l'une par rapport à l'autre d'une même distance. Ainsi, les rampes 54 sont toujours symétriques par rapport à un même plan médian fixe par rapport au bâti 66 quelle que soit la largeur de la fente 56. Lors de leur défilement entre les rampes 54 de la paire, l'axe "A" principal des préformes 12 est sensiblement compris dans ce plan médian.

Bien entendu, le dispositif motorisé de déplacement transversal est ici décrit à titre d'exemple non limitatif. L'invention est applicable à des dispositifs de déplacements de conceptions différentes, tels que des vérins pneumatiques, des vérins hydrauliques, des moteurs électriques linéaires, etc.

Lors d'un changement de format de préformes 12, plus particulièrement lorsque les préformes 12 du prochain lot présentent un diamètre D2 interne de col 16 différent de celui des préformes 12 du lot précédent, il est nécessaire de de remplacer les organes 30 de maintien d'un premier modèle adapté au préformes 12 du lot précédent par des organes 30 de maintien d'un deuxième modèle adapté aux préformes 12 du lot suivant afin de les adapter au diamètre D2 interne des prochaines préformes 12.

A cet effet, la station 10 de chauffage fonctionne selon un mode de réglage durant lequel aucune préforme 12 n'est transportée par le dispositif 28 de transport. En mode de réglage, certaines fonctions, tel que le chauffage, ne sont pas encore pleinement actives, par opposition à un mode de production durant lequel toutes les fonctions, y compris la fonction de chauffage, sont actives.

Lors d'un tel changement, les organes 30 de maintien du premier modèle sont tous démontés de leur support 32 mobile, puis les organes 30 de maintien du deuxième modèle sont montés à leur place sur chaque support 32 mobile.

L'invention propose un procédé de vérification des organes 30 de maintien après leur remplacement. Ce procédé est destiné à être appliqué à chaque organe 30 de maintien ainsi remplacé. Il peut donc être déclenché à l'issue du remplacement de tous les organes 30 de maintien ou pendant le remplacement des organes de maintien. Le procédé est mis en oeuvre avant une mise en service de la station de chauffage en mode de production. Ceci permet d'éviter tout risque de dysfonctionnement lié à une erreur lors du remplacement des organes 30 de maintien.

Pour la mise en oeuvre du procédé, l'installation de fabrication est équipée d'un dispositif 78 de capture d'image, comme cela est représenté à la [Fig. 1]. Le dispositif 78 de capture d'image est par exemple une caméra ou un appareil photo à capteur numérique apte à prendre une image numérique. Le dispositif 78 de capture d'image est agencé de manière à pouvoir prendre une image de chaque organe 30 de maintien le long du circuit fermé.

Plus précisément, le dispositif 78 de capture d'image est ici agencé dans la station 10 de chauffage de manière à prendre une image de chaque organe 30 de maintien le long du chemin de chauffage. Le dispositif 78 de capture d'image est plus particulièrement agencé de manière à prendre une image de l'organe 30 de maintien lorsque le support 32 mobile associé passe dans une zone "Z1" d'acquisition déterminée du chemin de chauffage.

Plus précisément, le dispositif 78 de capture d'image est ici agencé de manière à prendre le profil de chaque organe 30 de maintien selon une direction radiale par rapport à l'axe "A".

La zone "Z1" d'acquisition est ici agencée dans le virage 22c d'extrémité. Le dispositif 78 de capture d'image est ici agencé à l'extérieur du virage 22c d'extrémité. Cet agencement est particulièrement avantageux car cette région de la station 10 de chauffage dispose généralement d'un espace libre suffisant pour recevoir le dispositif 78 de capture d'image. En outre, le tunnel 22 est dénué de moyens de chauffage dans son virage 22c, ce qui permet d'éviter que le dispositif 78 de capture d'image ne soit endommagé par des températures trop élevées.

En variante, la zone d'acquisition peut être agencée en tout autre point du circuit fermé situé dans une région permettant l'agencement d'un dispositif de capture d'image.

Chacune des étapes du procédé de positionnement sont réalisées automatiquement par l'unité 60 électronique de commande.

Lors d'une première étape "E1" de mise en circulation, les supports 32 mobiles sont mis en mouvement le long de leur circuit fermé de manière à amener chaque support 32 mobile successivement dans la zone "Z1" d'acquisition. Leurs organes 30 de maintien circulent à vide, c'est-à-dire sans préforme.

Cette première étape "E1" peut être déclenchée après que tous les organes de maintien aient été remplacés. Dans ce cas, les supports 32 mobiles peuvent être en mouvement continu ou intermittent pendant la totalité du procédé de vérification.

Cette première étape "E1" peut aussi être déclenchée avant que tous les organes 30 de maintien aient été remplacés. En ce cas, il est nécessaire d'arrêter temporairement le mouvement des supports 32 mobiles pour permettre le remplacement des organes 30 de maintien lors du passage des supports 32 mobiles dans une zone "Z2" de changement.

Le procédé comporte aussi une deuxième étape "E2" d'acquisition d'une image de chaque organe 30 de maintien individuel lors du passage de chacun des supports 32 mobiles dans la zone "Z1" d'acquisition au moyen du dispositif 78 de capture d'image.

Cette deuxième étape "E2" est déclenchée lorsque chaque support 32 mobile ayant subi l'opération de remplacement dans la zone "Z2" de remplacement atteint la zone "Z1" d'acquisition.

En variante, lorsque tous les organes 30 de maintien ont préalablement été remplacés, cette deuxième étape "E2" commence en même temps que la première étape "E1" de mise en mouvement.

Le procédé comporte une troisième étape "E3" de vérification automatique de la présence d'un organe 30 de maintien sur chacune des images prises lors de l'étape "E2" d'acquisition par traitement informatique de chacune des images au moyen de l'unité 60 électronique de commande.

Cette troisième étape "E3" peut être réalisée pour chaque image directement après qu'elle ait été prise lors de la deuxième étape "E2" d'acquisition.

En variante, cette troisième étape "E3" est réalisée à l'issue de la deuxième étape "E2" d'acquisition, lorsqu'une image a été prise pour le passage de chacun des supports 32 mobiles dans la zone "Z1" d'acquisition.

Le procédé comporte une quatrième étape "E4" d'avertissement qui est déclenchée lorsqu'au moins un organe 30 de maintien est détecté comme étant absent d'un support 32 mobile lors de l'étape "E3" de vérification, un signal d'alerte est émis par l'unité 60 électronique de commande. Ce signal permet à un opérateur de rectifier cet oubli en équipant le support 32 mobile concerné avec un organe 30 de maintien.

Avantageusement, l'unité 60 électronique de commande permet de retrouver quel support 32 mobile ne comporte pas d'organe 30 de maintien en fonction de la position de l'image correspondante dans la chronologie de prise des images.

Chacune des étapes E1 à E4 du procédé sont itérées jusqu'à ce que la présence d'un organe 30 de maintien ait été vérifiée sur chaque support 32 mobile.

Par ailleurs, durant un changement de format de préforme, il est aussi nécessaire de procéder au positionnement précis des rampes 54 afin d'assurer que la fente 56 ait une largeur suffisante pour permettre le bon défilement des préformes 12. La fente 56 doit cependant être suffisamment étroite pour minimiser la transmission de chaleur, par rayonnement ou par convection, entre le tunnel 22 et le couloir 52, dans le cas où les rampes 54 sont des rampes de protection thermique, ou pour permettre un guidage efficace des préformes, dans le cas où les rampes 54 sont des rampes de guidage.

L'invention propose optionnellement de procéder au positionnement automatique des rampes 54 d'une paire lors du procédé de vérification des organes 30 de maintien.

En référence à la [Fig.5], le procédé de vérification comporte une cinquième étape "E5" de détermination automatique du diamètre "D3" externe de l'organe 30 de maintien qui est déclenchée après l'étape "E2" d'acquisition.

Au cours de cette étape, le diamètre "D3" externe de l'organe 30 de maintien est déterminé par traitement informatique au moyen de l'unité 60 électronique de commande de l'image dudit organe 30 de maintien réalisée au cours de l'étape "E2" d'acquisition.

Selon un premier mode de réalisation de la cinquième étape "E5" de détermination, la détermination du diamètre "D3" externe de l'organe 30 de maintien est réalisée par reconnaissance d'une marque visuelle portée par chacun des organes 30 de maintien.

Par exemple, il s'agit d'un code barre ou d'un code matriciel, tel qu'un QR code, qui est appliqué sur chacun des organes 30 de maintien. Ce code est susceptible apparaît sur chacune des images prises lors de l'étape "E1" d'acquisition. Ainsi, l'unité 60 électronique est apte à identifier et à lire les informations contenues sur ce code. Le code peut en lui-même contenir directement le diamètre externe de l'organe 30 de maintien.

En variante, le code contient un numéro de référence de l'organe 30 de maintien. L'unité 60 électronique de commande comporte alors une base de données préalablement enregistrée permettant de faire correspondre chaque numéro de référence à un diamètre "D3" externe de l'organe 30 de maintien.

Selon un deuxième mode de réalisation de la cinquième étape "E5" de détermination, la détermination du diamètre "D3" externe de l'organe 30 de maintien est réalisée par reconnaissance de forme sur l'image dudit organe 30 de maintien prise lors de l'étape "E2" d'acquisition.

A cet effet, le dispositif 78 de capture d'image est avantageusement agencé à une distance "C" prédéterminée d'un organe 30 de maintien dont le support 32 mobile est situé dans la zone "Z1" d'acquisition lors de l'opération d'acquisition de l'image. Ceci permet de connaître l'échelle à laquelle l'organe 30 de maintien apparaît sur l'image sans avoir besoin de se référer à un repère visuel. Le dispositif 78 de capture est conçu et positionné de manière à prendre une image numérique de l'organe 30 de maintien présentant une résolution suffisamment élevée pour réaliser les opérations permettant de déterminer le diamètre "D3" externe de l'organe 30 de maintien, avec une précision inférieure au millimètre.

Par exemple, L'unité 60 électronique de commande mesure sur l'image le diamètre "D3" externe de l'organe 30 de maintien. Puis l'unité 60 électronique de commande multiplie ladite dimension mesurée sur l'image par un coefficient "K" de proportionnalité prédéterminé. Le coefficient "K" de proportionnalité est notamment calculé en fonction de différents paramètres connus tels que la distance entre le dispositif 78 de capture d'image et les caractéristiques de l'optique l'équipant.

Le coefficient "K" de proportionnalité peut aussi être défini expérimentalement lors d'une opération d'étalonnage préalable.

Selon une variante de réalisation de cette cinquième étape "E5" de détermination, le contour de l'organe 30 de maintien représenté sur l'image, dit "contour détecté", est comparé avec des contours d'organes de maintien mémorisés au préalable dans l'unité 60 électronique de commande, dits "contours types". En effet, le nombre de formats d'organes 30 de maintien susceptibles d'équiper la station 10 de chauffage est généralement limité. Il est ainsi possible de mémoriser de manière exhaustive un contour type pour chacun de ces formats d'organe 30 de maintien dans l'unité 60 électronique de commande.

Chaque contour type mémorisé est associé à un diamètre "D3" externe mémorisés dans une base de données de l'unité 60 électronique de commande.

Lorsque la forme et les dimensions particulières du contour détecté correspondent sensiblement à celles d'un contour type similaire mémorisé, l'unité 60 électronique de commande est ainsi susceptible d'identifier automatiquement le contour type parmi les contours types mémorisés par reconnaissance de formes. L'unité 60 électronique de commande est ensuite apte à retrouver le diamètre "D3" externe correspondant dans la base de donnée.

Le procédé comporte aussi une sixième étape "E6" d'ajustement automatique de la largeur de la fente 56 par déplacement de l'au moins une rampe 54 mobile en fonction du diamètre "D1" sous col déterminé lors de la cinquième étape "E5" de détermination du diamètre "D3" externe afin d'ajuster la largeur de la fente 56 jusqu'à une largeur de passage égale au diamètre "D1" sous col additionné du jeu "j" transversal déterminé. Le diamètre "D1" sous col est déterminé en additionnant une dimension prédéterminée, correspondant à l'épaisseur nominale de la paroi d'une préforme diminuée de la surépaisseur "s", au diamètre "D3" externe de l'organe 30 de maintien.

Ici, les deux rampes 54 de la paire sont commandées en déplacement simultané. A cet effet, l'unité 60 électronique de commande pilote les dispositifs 58A motorisés de déplacement transversal. Cette sixième étape "E6" d'ajustement de la largeur intervient chronologiquement après la deuxième étape "E2" de détermination du diamètre "D1" sous col.

Avantageusement, le procédé comporte en outre une septième étape "E7" d'alerte qui est déclenchée pour chaque organe 30 de maintien à l'issue de l'étape "E5" de détection. Au cours de cette étape "E7" d'alerte, on vérifie que tous les organes 30 de maintien installés sur les supports 32 mobiles présentent le même diamètre "D3" externe ou que chaque organe 30 de maintien présente un diamètre "D3" externe conforme à une valeur de consigne renseignée préalablement dans l'unité 60 électronique de commande.

Si ce n'est pas le cas, un message d'alerte est envoyé à l'opérateur. Cette étape permet d'éviter qu'un des organes 30 de maintien ne présente un diamètre externe inadapté au format des préformes 12 destinées à être prises en charge lors de la reprise de la production.

Le procédé de vérification permet ainsi de vérifier rapidement et automatiquement que les opérations de remplacement des organes 30 de maintien ont été réalisées sans erreur.

## Revendications

1. Procédé de vérification automatique de la présence d'organes (30) de maintien de préformes (12) en matériau thermoplastique dans une station (10) de chauffage, la station (10) de chauffage étant équipée d'un dispositif (28) de transport des préformes (12) le long d'un tunnel (22) de chauffage, le dispositif (28) de transport comportant :
- une pluralité de supports (32) mobiles ;
- des organes (30) de maintien individuel des préformes (12) par leur col (16), chacun des organes (30) de maintien étant porté par un support (32) mobile, les organes (30) de maintien étant fixés de manière démontable sur leur support (32) mobile respectif ;
**caractérisé en ce qu'**il comporte :
- une étape (E1) de mise en mouvement des supports (32) mobiles pour les amener successivement dans une zone (Z1) d'acquisition ;
- une étape (E2) d'acquisition d'une image de chaque organes (30) de maintien individuels lors du passage de chacun des supports (32) mobiles dans la zone (Z1) d'acquisition au moyen d'un dispositif (78) de capture d'image ;
- une étape (E3) de vérification automatique de la présence d'un organe (30) de maintien sur chacune des images prises lors de l'étape (E2) d'acquisition par traitement informatique de chacune des images au moyen d'une unité (60) électronique de commande.

2. Procédé selon la revendication précédente, **caractérisé en ce que** lorsqu'au moins un organe (30) de maintien est détecté comme étant absent d'un support (32) mobile lors de l'étape (E3) de vérification, un signal d'alerte est émis par l'unité (60) électronique de commande.

3. Procédé selon l'une quelconque des revendications précédentes, **caractérisé en ce que** l'organe (30) de maintien est formé par un mandrin destiné à être inséré dans le col (16) d'une préforme (12), chaque organe (30) de maintien étant destiné à être remplacé lors d'un changement de format de préformes (12) afin d'être adapté à un diamètre (D3) externe de l'organe (30) de maintien au diamètre (D2) interne du col (16) de la préforme (12).

4. Procédé selon l'une quelconque des revendications précédentes, **caractérisé en ce qu'**il est déclenché après le début du remplacement des organes (30) de maintien, avant une mise en service de la station de chauffage.

5. Procédé selon l'une quelconque des revendications précédentes, **caractérisé en ce que** la station (10) de chauffage comporte :
- au moins une paire de rampes (54) longitudinales qui délimitent une fente (56) de défilement des préformes (12), au moins l'une des rampes (54) étant mobile transversalement pour faire varier la largeur de la fente (56) ;
- au moins un dispositif (58A) motorisé de déplacement transversal de l'au moins une rampe (54) mobile pour adapter la largeur de la fente (56), ledit dispositif (58A) motorisé étant piloté automatiquement par une unité (60) électronique de commande.

6. Procédé selon la revendication précédente prise en combinaison avec l'une quelconque 3 ou 4, **caractérisé en ce qu'**il comporte :
- une étape (E5) de détermination automatique du diamètre (D3) externe de l'organe (30) de maintien par traitement informatique d'au moins une des images prises lors de l'étape (E2) d'acquisition ;
- une étape (E6) d'ajustement automatique de la largeur de la fente (56) par déplacement de l'au moins une rampe (54) mobile en fonction du diamètre (D3) externe déterminé lors de l'étape (E5) de détermination afin d'adapter la largeur de la fente (56).

7. Procédé selon l'une quelconque des revendications précédentes, **caractérisé en ce que** lors de l'étape (E2) d'acquisition, le dispositif (78) de capture d'image prend le profil de l'organe de maintien.

8. Procédé selon la revendication précédente, **caractérisé en ce que** le dispositif (78) de capture d'image est agencé à une distance (C) prédéterminée de l'organe de maintien lors de l'opération de prise d'image.

9. Procédé selon l'une quelconque des revendications 6 à 8, **caractérisé en ce que** la détermination du modèle de l'organe de maintien est réalisée par reconnaissance d'une marque visuelle portée par chacun des organes de maintien.

10. Procédé selon la revendication 8, **caractérisé en ce que** lors de l'étape (E5) de détermination, le diamètre (D3) externe de l'organe (30) de maintien est obtenu par multiplication de la largeur de l'organe (30) de maintien mesurée sur l'image par un coefficient (K) de proportionnalité prédéterminé.

11. Procédé selon la revendication 8, **caractérisé en ce que** lors de l'étape (E5) de détermination, le contour de l'organe (30) de maintien représenté sur l'image est comparé avec des contours d'organes (30) de maintien mémorisés par l'unité (60) électronique de commande, chaque contour mémorisé étant associé à un diamètre (D3) externe mémorisé par l'unité (60) électronique de commande.

## Patentansprüche

1. Verfahren zur automatischen Überprüfung des Vorhandenseins von Elementen (30) zum Halt von Vorformlingen (12) aus thermoplastischem Material in einer Heizstation (10), wobei die Heizstation (10) mit einer Vorrichtung (28) für den Transport der Vorformlinge (12) entlang eines Heiztunnels (22) ausgestattet ist, wobei die Transportvorrichtung (28) aufweist:
- eine Vielzahl von beweglichen Trägern (32);
- Elemente (30) für den einzelnen Halt der Vorformlinge (12) an ihrem Hals (16), wobei jedes der Halteelemente (30) von einem beweglichen Träger (32) getragen wird, wobei die Halteelemente (30) auf ihrem beweglichen Träger (32) abnehmbar befestigt sind;
**dadurch gekennzeichnet, dass** es aufweist:
- einen Schritt (E1), die beweglichen Träger (32) in Bewegung zu versetzen, um sie nacheinander in einen Erfassungsbereich (Z1) zu bringen;
- einen Schritt (E2) der Erfassung eines Bilds jedes einzelnen Halteelements (30) beim Übergang jedes der beweglichen Träger (32) in den Erfassungsbereich (Z1) mittels einer Bilderfassungsvorrichtung (78);
- einen Schritt (E3) der automatischen Überprüfung des Vorhandenseins eines Halteelements (30) in jedem der im Erfassungsschritt (E2) aufgenommenen Bilder durch Datenverarbeitung jedes der Bilder mittels einer elektronischen Steuereinheit (60).

2. Verfahren nach dem vorhergehenden Anspruch, **dadurch gekennzeichnet, dass**, wenn mindestens ein Halteelement (30) im Überprüfungsschritt (E3) als nicht auf einem beweglichen Träger (32) vorhanden erkannt wird, ein Warnsignal von der elektronischen Steuereinheit (60) ausgegeben wird.

3. Verfahren nach einem der vorhergehenden Ansprüche, **dadurch gekennzeichnet, dass** das Halteelement (30) von einem Dorn gebildet wird, der dazu bestimmt ist, in den Hals (16) eines Vorformlings (12) eingeführt zu werden, wobei jedes Halteelement (30) dazu bestimmt ist, bei einer Formatänderung von Vorformlingen (12) ausgetauscht zu werden, um an einem Außendurchmesser (D3) des Halteelements (30) an den Innendurchmesser (D2) des Halses (16) des Vorformlings (12) angepasst zu sein.

4. Verfahren nach einem der vorhergehenden Ansprüche, **dadurch gekennzeichnet, dass** es nach dem Beginn des Austauschs der Halteelemente (30) vor einer Inbetriebnahme der Heizstation gestartet wird.

5. Verfahren nach einem der vorhergehenden Ansprüche, **dadurch gekennzeichnet, dass** die Heizstation (10) aufweist:
- mindestens ein Paar von Längsrampen (54), die einen Durchlaufschlitz (56) der Vorformlinge (12) begrenzen, wobei mindestens eine der Rampen (54) quer beweglich ist, um die Breite des Schlitzes (56) zu verändern;
- mindestens eine motorisierte Vorrichtung (58A) zur Querverschiebung der mindestens einen beweglichen Rampe (54), um die Breite des Schlitzes (56) anzupassen, wobei die motorisierte Vorrichtung (58A) von einer elektronischen Steuereinheit (60) automatisch gesteuert wird.

6. Verfahren nach dem vorhergehenden Anspruch in Kombination mit einem der Ansprüche 3 oder 4, **dadurch gekennzeichnet, dass** es aufweist:
- einen Schritt (E5) der automatischen Bestimmung des Außendurchmessers (D3) des Halteelements (30) durch Datenverarbeitung mindestens eines der im Erfassungsschritt (E2) aufgenommenen Bilder;
- einen Schritt (E6) der automatischen Justierung der Breite des Schlitzes (56) durch Verschiebung der mindestens einen beweglichen Rampe (54) abhängig vom im Bestimmungsschritt (E5) bestimmten Außendurchmesser (D3), um die Breite des Schlitzes (56) anzupassen.

7. Verfahren nach einem der vorhergehenden Ansprüche, **dadurch gekennzeichnet, dass** im Erfassungsschritt (E2) die Bilderfassungsvorrichtung (78) das Profil des Halteelements aufnimmt.

8. Verfahren nach dem vorhergehenden Anspruch, **dadurch gekennzeichnet, dass** die Bilderfassungsvorrichtung (78) beim Bildaufnahmevorgang in einem vorbestimmten Abstand (C) vom Halteelement angeordnet ist.

9. Verfahren nach einem der Ansprüche 6 bis 8, **dadurch gekennzeichnet, dass** die Bestimmung des Modells des Halteelements durch Erkennung einer von jedem der Halteelemente getragenen visuellen Markierung durchgeführt wird.

10. Verfahren nach Anspruch 8, **dadurch gekennzeichnet, dass** im Bestimmungsschritt (E5) der Außendurchmesser (D3) des Halteelements (30) durch Multiplikation der im Bild gemessenen Breite des Halteelements (30) mit einem vorbestimmten Proportionalitätskoeffizienten (K) erhalten wird.

11. Verfahren nach Anspruch 8, **dadurch gekennzeichnet, dass** im Bestimmungsschritt (E5) der Umriss des im Bild dargestellten Halteelements (30) mit von der elektronischen Steuereinheit (60) gespeicherten Umrissen von Halteelementen (30) verglichen wird, wobei jeder gespeicherte Umriss einem von der elektronischen Steuereinheit (60) gespeicherten Außendurchmesser (D3) zugeordnet ist.

## Claims

1. Method for automatically verifying the presence of members (30) for holding preforms (12) made from a thermoplastic material in a heating station (10), the heating station (10) being provided with a device (28) for transporting the preforms (12) along a heating tunnel (22), the transport device (28) comprising:
- a plurality of movable supports (32);
- members (30) for individually holding the preforms (12) by their neck (16), each of the holding members (30) being borne by a movable support (32), the holding members (30) being removably fixed to their respective movable supports (32);
**characterized in that** it comprises:
- a step (E1) of setting the movable supports (32) in motion in order to bring them in succession into an acquisition zone (Z1);
- a step (E2) of acquiring an image of each individual holding member (30) as each of the movable supports (32) passes through the acquisition zone (Zl), by means of an image capturing device (78);
- a step (E3) of automatically verifying the presence of a holding member (30) on each of the images taken during the acquisition step (E2), by computer processing of each of the images by means of an electronic control unit (60).

2. Method according to the preceding claim, **characterized in that** when at least one holding member (30) is detected as being absent from a movable support (32) during the verification step (E3), the electronic control unit (60) emits a warning signal.

3. Method according to any one of the preceding claims, **characterized in that** the holding member (30) is formed by a mandrel suitable for being inserted into the neck (16) of a preform (12), each holding member (30) being suitable for being replaced during a change in format of the preforms (12) in order to adapt an outer diameter (D3) of the holding member (30) to the inner diameter (D2) of the neck (16) of the preform (12).

4. Method according to any one of the preceding claims, **characterized in that** it is triggered after the start of the replacement of the holding members (30), before the heating station is started up.

5. Method according to any one of the preceding claims, **characterized in that** the heating station (10) comprises:
- at least one pair of longitudinal ramps (54) that define a slot (56) for the preforms (12) to travel through, at least one of the ramps (54) being transversely movable in order to vary the width of the slot (56);
- at least one motorized device (58A) for transversely moving the at least one movable ramp (54) in order to adapt the width of the slot (56), said motorized device (58A) being automatically controlled by an electronic control unit (60).

6. Method according to the preceding claim taken in combination with any one of Claims 3 and 4, **characterized in that** it comprises:
- a step (E5) of automatically determining the outer diameter (D3) of the holding member (30) by computer processing of at least one of the images taken during the acquisition step (E2);
- a step (E6) of automatically adjusting the width of the slot (56) by moving the at least one movable ramp (54) as a function of the outer diameter (D3) determined during the determining step (E5) in order to adapt the width of the slot (56).

7. Method according to any one of the preceding claims, **characterized in that**, during the acquisition step (E2), the image capturing device (78) takes the profile of the holding member.

8. Method according to the preceding claim, **characterized in that** the image capturing device (78) is arranged at a predetermined distance (C) from the holding member during the image acquisition operation.

9. Method according to any one of Claims 6 to 8, **characterized in that** the model of the holding member is determined by recognition of a visual mark borne by each of the holding members.

10. Method according to Claim 8, **characterized in that** during the determining step (E5), the outer diameter (D3) of the holding member (30) is obtained by multiplying the width of the holding member (30) measured on the image by a predetermined proportionality coefficient (K).

11. Method according to Claim 8, **characterized in that** during the determining step (E5), the outline of the holding member (30) shown on the image is compared with outlines of holding members (30) stored by the electronic control unit (60), each stored outline being associated with an outer diameter (D3) stored by the electronic control unit (60).
